# EUROPEAN PATENT SPECIFICATION

(11) **EP 4 112 432 B1**
(45) Date of publication and mention of the grant of the patent: **31.07.2024**
(21) Application number: 22180582.3
(22) Date of filing: 22.06.2022
(51) Int. Cl.: B62K 3/06, B60R 9/10, B62K 15/00, B62K 19/24

(54) **BICYCLE CROSS BAR ADAPTOR WITH A ROTATABLE CONTROL UNIT**
FAHRRAD-QUERLENKERADAPTER MIT EINER DREHBAREN STEUEREINHEIT
ADAPTATEUR DE BARRE TRANSVERSALE DE BICYCLETTE DOTÉ D'UNE UNITÉ DE COMMANDE DE ROTATION

(30) Priority: 30.06.2021 TW 110207638 U
(43) Date of publication of application: 04.01.2023
(73) Proprietor: King Rack Industrial Co., Ltd., Taichung City (TW)
(72) Inventor: WANG, Chiu-Kuei, Taichung City (TW)
(74) Representative: Cabinet Chaillot

(56) References cited:
- JP-A- 2019 180 984
- US-A1- 2005 104 305
- US-B1- 6 435 523

## Description

### BACKGROUND OF THE INVENTION

### 1. Fields of the invention

The present invention relates to a bicycle cross bar adaptor, and more particularly, to a retractable bicycle cross bar adaptor having a rotatable control unit.

### 2. Descriptions of Related Art

The bicycle cross bar adaptor is used to be installed between the seat tube and the head tube of a bicycle so that when the bicycle is carried by a bicycle rack on a vehicle, the bicycle rack supports or clamps the cross bar adaptor.

Taiwanese Utility Model No. M559826 discloses a retractable bicycle cross bar adaptor that includes a bar, a movable unit and a securing unit. The bar has multiple notches, and the movable unit is slidably connected to the bar. The movable unit includes a base, a slide and a stop, wherein the slide is slidably connected to the base so as to be in contact with the stop optionally. The stop is engaged one of the notches of the bar. The securing unit is connected to the movable unit and is connected to a bicycle.

Although the length of the retractable bicycle cross bar adaptor can be adjusted, it involves too many pars and the parts have complicated shapes. The slide is biased by two springs which moves the slide back and forth when the user pushes the base to allow the stop to move, such that the bar can be extended or retracted to adjust the length of the cross bar adaptor. It is noted that the movable unit and the securing unit includes many parts that have different sizes and shapes, some of the parts are tiny, therefore the manufacturing cost of the retractable bicycle cross bar adaptor is high and cannot compete with other similar products in the market.

The present invention intends to provide a retractable bicycle cross bar adaptor to eliminate the shortcomings mentioned above.

### SUMMARY OF THE INVENTION

The present invention relates to a retractable bicycle cross bar adaptor and comprises a bar having a first tube, a second tube and a control unit. The first tube has a first end and a second end, and the second tube has a first end and a second end. The control unit is connected between the first tube and the second tube. A first hook is connected to the second end of the first tube, and a second hook is connected to the second end of the second tube. A first connection end is formed to the first end of the first tube, and a second connection end is formed to the first end of the second tube. The second connection end is slidably inserted into the first connection end. The control unit includes a first part and a second part. The first part is a tubular part and has a head formed to the first end thereof, and multiple outer threads are formed to the outer surface of the first part. Multiple plates extend from the second end of the first parts. The first part includes a passage defined axially therethrough. Multiple slots are formed alternatively between the multiple plates. The first connection end is inserted into the first part from the head of the first part and secured to the head of the first part. The second connection end is inserted into the first part from the second end of the first part and movably inserted into the first connection end. Each of the plates has a tapered outer face along the axial direction of the plate. The second part is rotatably and movably mounted to the first part. The second part presses the plates to clamp the second tube, or the second part releases the plates so that the second tube is movable relative to the first tube.

Preferably, an end cap is connected to the second connection end of the second tube.

Preferably, the inn diameter of the passage at of the head of the first part is larger than the outer diameter of the first connection end, so that the first connection end is inserted into the passage at of the head of the first part.

Preferably, the second part includes an operation portion and a tubular section extending from one end of the operation portion. The operation portion includes inner threads formed to the inner periphery thereof so as to be engaged with the outer threads of the first part. The inner periphery of the tubular section includes an inner tapered face which is matched with the outer tapered face of the plates of the first part.

The operation of the control unit of the present invention is easy by simply rotating the second part to press the plates of the first part to secure the second tube to set the desired length of the bicycle cross bar adaptor of the present invention. By rotating the second part in an opposite direction, the plates of the first part are released so that the second tube is freely moved relative to the first part, this status allows the user to re-set the length of the bicycle cross bar adaptor of the present invention. The present invention includes a simple structure which is easily manufactured and maintained.

The first tube and the second tube of the bicycle cross bar adaptor of the present invention are normal tubes with no specific machining required so as to have low manufacturing cost.

The second part is threadedly connected to the first part, the movement of the second part is stable and reliable to press or release the plates of the first part.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the retractable cross bar adaptor of the present invention;
Fig. 2 is an exploded view of the retractable cross bar adaptor of the present invention;
Fig. 3 is a cross sectional view to show that the plates of the first part are pressed by the second part;
Fig. 4 is a cross sectional view to show that the plates of the first part are released from the second part, and
Fig. 5 shows that the retractable cross bar adaptor of the present invention is used to a bicycle.

### DETAILED DESCRIPTION OF THE PREFERRED EMBODIMENT

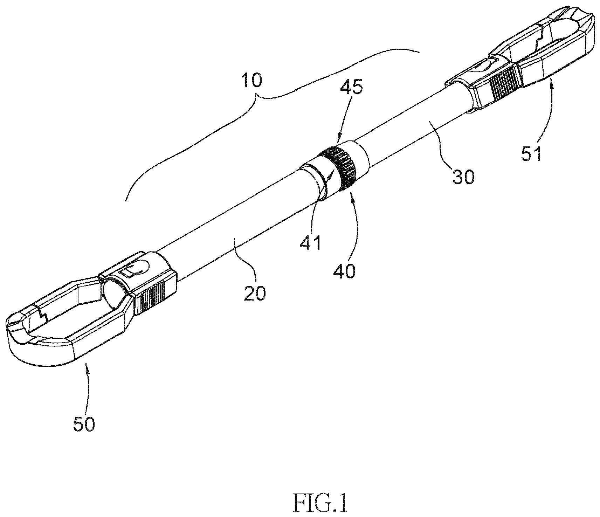

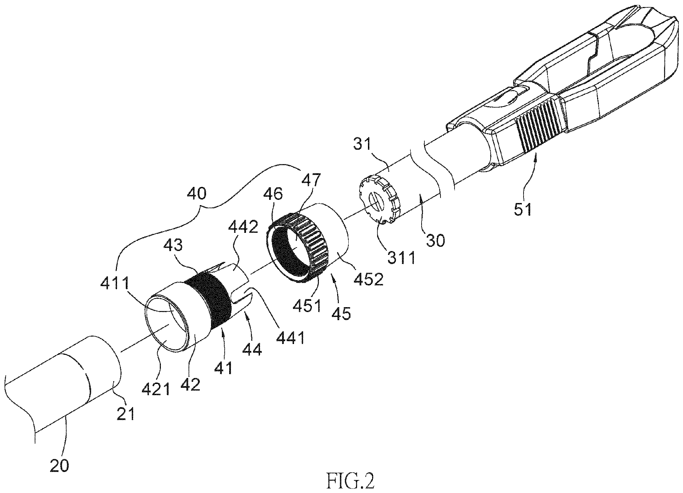

Referring to Figs. 1 to 3, the retractable cross bar adaptor of the present invention comprises a bar 10 having a first tube 20, a second tube 30 and a control unit 40. The first tube 20 has a first end and a second end, and the second tube 30 has a first end and a second end. The control unit 40 is located between the first tube 20 and the second tube 30. A first connection end 21 is formed to the first end of the first tube 20, and a second connection end 31 formed to the first end of the second tube 30. The second connection end 31 is slidably inserted into the first connection end 21.

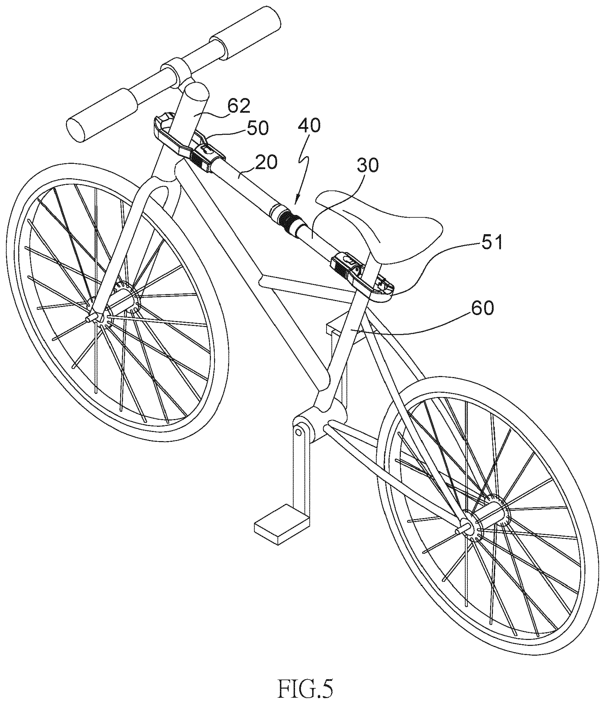

A first hook 50 is connected to the second end of the first tube 20, and a second hook 51 connected to the second end of the second tube 30. As shown in Fig. 5, the first and second hooks 50, 51 are respectively hooked to the head tube 62 and the seat tube 60 of a bicycle to perform as a top tube of the bicycle.

The control unit 40 includes a first part 41 and a second part 45. The first part 41 is a tubular part and includes a passage 411 defined axially therethrough. A head 42 is formed to the first end of the first part 41. Outer threads 43 are formed to the outer surface of the first part 41. Multiple plates 44 extend from the second end of the first parts 41. Multiple slots 441 are formed alternatively between the multiple plates 44 so that the plates 44 are flexible in radial direction of the second part 45. Each of the plates 44 has a tapered outer face 442 along the axial direction of the plate 44. The first connection end 21 is inserted into the first part 41 from the head 42 of the first part 41 and secured to the head 42 of the first part 41. Specifically, the inn diameter of the passage 411 at of the head 42 of the first part 41 is larger than the outer diameter of the first connection end 21, so that the first connection end 21 is inserted into the passage 411 at of the head 42 of the first part 41. The second connection end 31 is inserted into the first part 41 from the second end of the first part 41 and is movably inserted into the first connection end 21. An end cap 311 is connected to the second connection end 31 of the second tube 30 to prevent dust from entering into the second tube 30 and to reinforce the structural strength.

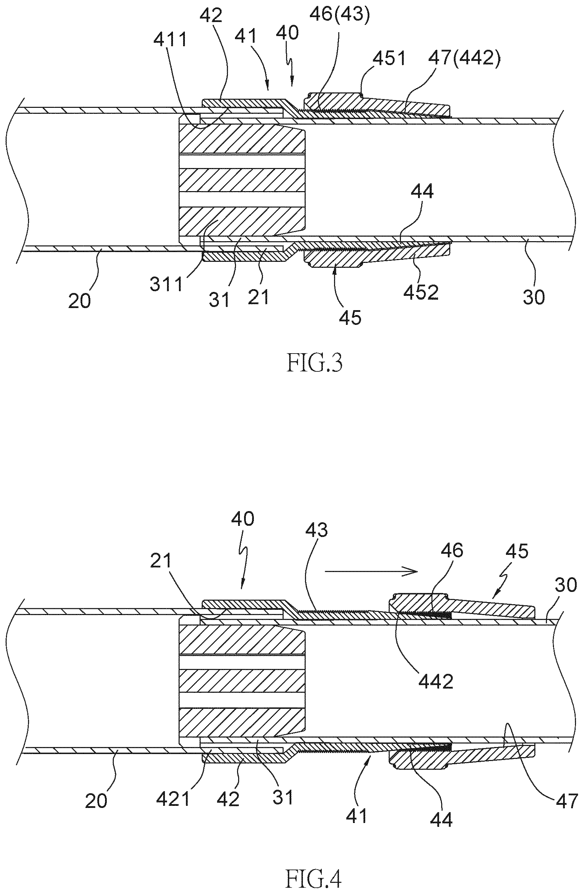

Specifically, as shown in Figs. 3 and 4, the second part 45 is a tubular part and includes an operation portion 451 and a tubular section 452 extending from one end of the operation portion 451. The operation portion 451 includes a ridged outer surface so that the users can easily hold and rotate the second part 45. Inner threads 46 are formed to the inner periphery of the tubular section 452 so as to be engaged with the outer threads 43 of the first part 41. An inner periphery of the tubular section 452 includes an inner tapered face 47 which is matched with the outer tapered face 442 of the plates 44 of the first part 41.

When in use, the first and second hooks 50, 51 are respectively hooked to the head tube 62 and the seat tube 60 of a bicycle to perform as a top tube of the bicycle as shown in Fig. 5. As shown in Fig. 3, when rotating the second part 45 toward the first part 41 along the engagement of the inner threads 46 and the outer threads 43, the inner tapered face 47 of the tubular section 452 of the second part 45 presses the outer tapered face 442 on the plates 44 of the first part 41 to clamp the second tube 30. Therefore, the desired length of the bicycle cross bar adaptor is set.

As shown in Fig. 4, when rotating the second part 45 away from the first part 41 along the engagement of the inner threads 46 and the outer threads 43, the tubular section 452 of the second part 45 releases the plates 44 of the first part 41 so that the second tube 30 can be moved relative to the first tube 20 to adjust the length of the bicycle cross bar adaptor.

While we have shown and described the embodiment in accordance with the present invention, it should be clear to those skilled in the art that further embodiments may be made without departing from the scope of the present invention. The scope of the invention being defined by the attached claims.

## Claims

1. A retractable bicycle cross bar adaptor, comprising:
a bar (10) having a first tube (20), a second tube (30) and a control unit (40), the first tube (20) having a first end and a second end, the second tube (30) having a first end and a second end, the control unit (40) connected between the first tube (20) and the second tube (30), a first hook (50) connected to the second end of the first tube (20), a second hook (51) connected to the second end of the second tube (30);
a first connection end (21) formed to the first end of the first tube (20), a second connection end (31) formed to the first end of the second tube (30), the second connection end (31) slidably inserted into the first connection end (21), and **characterized by**
the control unit (40) including a first part (41) and a second part (45), the first part (41) being a tubular part and having a head (42) formed to a first end of the first part (41), outer threads (43) formed to an outer surface of the first part (41), multiple plates (441) extending from a second end of the first parts (41), the first part (41) including a passage (411) defined axially therethrough, multiple slots formed alternatively between the multiple plates (441), the first connection end (21) inserted into the first part (41) from the head (42) of the first part (41) and secured to the head (42) of the first part (41), the second connection end (31) inserted into the first part (41) from the second end of the first part (41) and movably inserted into the first connection end (21), each of the plates having an tapered outer face (442) along an axial direction of the plate, the second part (45) rotatably and movably mounted to the first part (41), the second part (45) pressing the plates to clamp the second tube (30), or the second part (45) releasing the plates so that the second tube (30) is movable relative to the first tube (20).

2. The retractable bicycle cross bar adaptor as claimed in claim 1, wherein an end cap (311) is connected to the second connection end (31) of the second tube (30).

3. The retractable bicycle cross bar adaptor as claimed in claim 1, wherein an inn diameter of the passage (411) at of the head (42) of the first part (41) is larger than an outer diameter of the first connection end (21), so that the first connection end (21) is inserted into the passage (411) at of the head (42) of the first part (41).

4. The retractable bicycle cross bar adaptor as claimed in claim 1, wherein the second part (45) includes an operation portion (451) and a tubular section (452) extending from one end of the operation portion (451), the operation portion (451) includes inner threads (46) formed to an inner periphery thereof so as to be engaged with the outer threads (43) of the first part (41), an inner periphery of the tubular section (452) includes an inner tapered face (47) which is matched with the outer tapered face (442) of the plates of the first part (41).

## Patentansprüche

1. - Einziehbarer Fahrrad-Querlenkeradapter, umfassend:
eine Stange (10), die ein erstes Rohr (20), ein zweites Rohr (30) und eine Steuereinheit (40) aufweist, wobei das erste Rohr (20) ein erstes Ende und ein zweites Ende aufweist, das zweite Rohr (30) ein erstes Ende und ein zweites Ende aufweist, die Steuereinheit (40) zwischen dem ersten Rohr (20) und dem zweiten Rohr (30) verbunden ist, ein erster Haken (50) mit dem zweiten Ende des ersten Rohrs (20) verbunden ist, ein zweiter Haken (51) mit dem zweiten Ende des zweiten Rohrs (30) verbunden ist;
ein erstes Verbindungsende (21), das an dem ersten Ende des ersten Rohrs (20) gebildet ist, ein zweites Verbindungsende (31), das an dem ersten Ende des zweiten Rohrs (30) gebildet ist, wobei das zweite Verbindungsende (31) gleitend in das erste Verbindungsende (21) eingesetzt ist, und
**dadurch gekennzeichnet, dass**
die Steuereinheit (40) ein erstes Teil (41) und ein zweites Teil (45) beinhaltet, wobei das erste Teil (41) ein rohrförmiges Teil ist und einen Kopf (42), der an einem ersten Ende des ersten Teils (41) gebildet ist, ein Außengewinde (43), das an einer Außenfläche des ersten Teils (41) gebildet ist, und mehrere Platten (441), die sich von einem zweiten Ende des ersten Teils (41) erstrecken, aufweist, wobei das erste Teil (41) einen axial durch ihn hindurch definierten Durchgang (411) beinhaltet, mehrere Schlitze abwechselnd zwischen den mehreren Platten (441) gebildet sind, das erste Verbindungsende (21) von dem Kopf (42) des ersten Teils (41) her in das erste Teil (41) eingeführt und an dem Kopf (42) des ersten Teils (41) befestigt ist, das zweite Verbindungsende (31) von dem zweiten Ende des ersten Teils (41) her in das erste Teil (41) eingeführt und beweglich in das erste Verbindungsende (21) eingeführt ist, wobei jede der Platten eine sich verjüngende Außenfläche (442) entlang einer axialen Richtung der Platte aufweist, wobei das zweite Teil (45) drehbar und beweglich an dem ersten Teil (41) montiert ist, wobei das zweite Teil (45) die Platten drückt, um das zweite Rohr (30) einzuklemmen, oder das zweite Teil (45) die Platten freigibt, sodass das zweite Rohr (30) in Bezug auf das erste Rohr (20) beweglich ist.

2. - Einziehbarer Fahrrad-Querlenkeradapter nach Anspruch 1, wobei eine Endkappe (311) mit dem zweiten Verbindungsende (31) des zweiten Rohrs (30) verbunden ist.

3. - Einziehbarer Fahrrad-Querlenkeradapter nach Anspruch 1, wobei ein Innendurchmesser des Durchgangs (411) an dem Kopf (42) des ersten Teils (41) größer ist als ein Außendurchmesser des ersten Verbindungsendes (21), sodass das erste Verbindungsende (21) in den Durchgang (411) an dem Kopf (42) des ersten Teils (41) eingeführt wird.

4. - Einziehbarer Fahrrad- Querlenkeradapter nach Anspruch 1, wobei das zweite Teil (45) einen Betätigungsabschnitt (451) und einen rohrförmigen Abschnitt (452), der sich von einem Ende des Betätigungsabschnitts (451) erstreckt, beinhaltet, der Betätigungsabschnitt (451) ein Innengewinde (46) beinhaltet, das an einem inneren Umfang davon gebildet ist, um mit dem Außengewinde (43) des ersten Teils (41) einzugreifen, wobei ein innerer Umfang des rohrförmigen Abschnitts (452) eine innere konische Fläche (47) beinhaltet, die an die äußere konische Fläche (442) der Platten des ersten Teils (41) angepasst ist.

## Revendications

1. - Barre adaptateur télescopique pour bicyclette, comprenant :
une barre (10) ayant un premier tube (20), un second tube (30) et une unité de commande (40), le premier tube (20) ayant une première extrémité et une seconde extrémité, le second tube (30) ayant une première extrémité et une seconde extrémité, l'unité de commande (40) étant reliée entre le premier tube (20) et le second tube (30), un premier crochet (50) étant relié à la seconde extrémité du premier tube (20), un second crochet (51) étant relié à la seconde extrémité du second tube (30) ;
une première extrémité de liaison (21) formée à la première extrémité du premier tube (20), une seconde extrémité de liaison (31) formée à la première extrémité du second tube (30), la seconde extrémité de liaison (31) étant introduite de manière coulissante dans la première extrémité de liaison (21), et
**caractérisée par**
l'unité de commande (40) comprenant une première partie (41) et une seconde partie (45), la première partie (41) étant une partie tubulaire et ayant une tête (42) formée à une première extrémité de la première partie (41), des filets extérieurs (43) formés à une surface extérieure de la première partie (41), de multiples plaques (441) s'étendant à partir d'une seconde extrémité des premières parties (41), la première partie (41) comprenant un passage (411) défini axialement à travers celle-ci, de multiples fentes formées de manière alternée entre les multiples plaques (441), la première extrémité de liaison (21) étant introduite dans la première partie (41) à partir de la tête (42) de la première partie (41) et fixée à la tête (42) de la première partie (41), la seconde extrémité de liaison (31) étant introduite dans la première partie (41) à partir de la seconde extrémité de la première partie (41) et introduite de manière mobile dans la première extrémité de liaison (21), chacune des plaques ayant une face extérieure effilée (442) le long d'une direction axiale de la plaque, la seconde partie (45) étant montée de manière rotative et mobile sur la première partie (41), la seconde partie (45) pressant les plaques pour serrer le second tube (30), ou la seconde partie (45) libérant les plaques de telle sorte que le second tube (30) est mobile par rapport au premier tube (20) .

2. - Barre adaptateur télescopique pour bicyclette selon la revendication 1, dans lequel un embout (311) est relié à la seconde extrémité de liaison (31) du second tube (30) .

3. - Barre adaptateur télescopique pour bicyclette selon la revendication 1, dans lequel un diamètre intérieur du passage (411) à la tête (42) de la première partie (41) est plus grand qu'un diamètre extérieur de la première extrémité de liaison (21), de telle sorte que la première extrémité de liaison (21) est introduite dans le passage (411) à la tête (42) de la première partie (41).

4. - Barre adaptateur télescopique pour bicyclette selon la revendication 1, dans lequel la seconde partie (45) comprend une portion d'actionnement (451) et une section tubulaire (452) s'étendant à partir d'une extrémité de la portion d'actionnement (451), la portion d'actionnement (451) comprend des filets intérieurs (46) formés à une périphérie intérieure de celle-ci de façon à s'engager avec les filets extérieurs (43) de la première partie (41), une périphérie intérieure de la section tubulaire (452) comprend une face intérieure effilée (47) qui est mise en correspondance avec la face extérieure effilée (442) des plaques de la première partie (41).
